# DEMANDE DE BREVET EUROPEEN

(11) **EP 2 468 681 A1**
(43) Date de publication de la demande: **27.06.2012**
(21) Numéro de dépôt: 11290518.7
(22) Date de dépôt: 08.11.2011
(51) Int. Cl.: C01B 3/32, C01B 3/34, C01B 3/38, C01B 3/48, C01B 3/58

(54) **Procédé de production d'hydrogène integré thermiquement par reformage d'une charge hydrocarbonée**

(30) Priorité: 22.12.2010 FR 1005020
(71) Demandeur: IFP Energies nouvelles, 92852 Rueil-Malmaison Cedex (FR)
(72) Inventeur: Guillou Florent, 69360 Ternay (FR); Surla Karine, 69560 Saint cyr sur le rhone (FR); Ambrosino Jean-Louis, 69360 Ternay (FR); Boyer Christophe, 69390 Charly (FR)

(57) **Abrégé**

L'invention concerne un procédé de production d'hydrogène intégré thermiquement par reformage d'une charge hydrocarbonée, dans un réacteur de reformage, comprenant une étape de maintien de la température de l'effluent issu du réacteur de reformage par échange de chaleur à co-courant, dans un échangeur de chaleur co-courant, entre l'effluent issu du réacteur de reformage et la charge hydrocarbonée que l'on veut réformer. La température du gaz de synthèse en sortie de l'échangeur charge-effluent est comprise entre 250°C et 400°C.

## Description

L'invention se situe dans le domaine de la production d'hydrogène par reformage d'une charge hydrocarbonée.

La production d'hydrogène est en pleine croissance. En effet, au niveau de la production d'énergie par exemple, les charges des raffineries sont de plus en plus lourdes, de plus en plus soufrées et nécessite de plus en plus d'hydrogène pour maintenir la production de carburant. C'est également le cas dans le domaine des biocarburants avec l'hydrotraitement poussé des huiles végétales.

La production d'hydrogène à grande échelle se fait le plus souvent par reformage à la vapeur de gaz naturel (SMR pour Steam Methane Reforming selon la terminologie anglo-saxonne). Cette production est bien adaptée aux importants consommateurs industriels. En revanche, pour des besoins plus limités, il est courant d'utiliser des unités plus petites, moins complexes ou pouvant traiter une charge liquide facile à transporter et à stocker loin des réseaux habituels de distribution.

Le reformage de gaz naturel ou de charges hydrocarbures légères telles que les alcanes courts ou les alcools légers se fait dans un souci de simplification et d'économie, par reformage autotherme à l'air (ATR, pour Auto Thermal Reforming selon la terminologie anglo-saxonne). Pour l'ATR, il n'est pas nécessaire d'avoir recours à une source externe de chaleur pour compenser le réchauffage des réactifs et l'endothermie de la réaction de reformage mais il est nécessaire d'avoir un apport contrôlé et limité d'air dans le milieu réactionnel qui provoque l'oxydation partielle et exothermique d'une fraction la charge et/ou du gaz de synthèse issu de la réaction de reformage. Cet apport d'air impacte directement le rendement de l'unité, on cherche ainsi à le limiter au maximum, par exemple par récupération de la chaleur des effluents.

Par ailleurs, dans les conditions de pression et de température en sortie d'ATR et au vu de la composition du gaz de synthèse issu de l'ATR et en particulier de sa teneur élevée en monoxyde de carbone, il y a un risque de corrosion par "carburation catastrophique" ("metal dusting" selon la terminologie anglo-saxonne) sur les éléments métalliques situées en aval du réacteur sur une plage de température entre 400 et 900 °C selon la nature du matériau, d'où la nécessité d'abaisser la température de l'effluent le plus rapidement possible en sortie d'ATR.

Ces deux aspects ont conduit à l'utilisation d'échangeurs charge-effluents où la charge, en totalité ou en partie, à température ambiante, est réchauffée, évaporée et surchauffée dans un échangeur où circule le gaz de synthèse chaud issu de du réacteur ATR.

La configuration la plus utilisée est la configuration à contre-courant. Cela permet à la fois d'extraire le maximum de chaleur de l'effluent de l'ATR mais aussi de produire une charge réchauffée et/ou surchauffée à la température la plus élevée possible, la configuration à contre courant permettant une approche resserrée entre la charge et l'effluent de l'ATR à sa température maximale.

La demande de brevet EP 2 107 043 qui décrit un système de production d'hydrogène à partir d'éthanol utilise une configuration de ce type. Le procédé de production d'éthanol inclue un réacteur ATR et une récupération de la chaleur en sortie du réacteur ATR par un échangeur à contre courant entre le gaz de synthèse et un mélange entre éthanol et vapeur.
- L'utilisation d'un échangeur à contre-courant peut parfois poser des problèmes de refroidissement de l'effluent ATR, particulièrement lors des phases transitoires de démarrage, d'arrêt ou des variations de cas de marche de l'unité.

La présente invention propose de répondre à ces problématiques de contrôle de température en aval du réacteur ATR fonctionnant en régime transitoire et plus généralement de stabilisation de température d'effluent gazeux, par une configuration particulière de couplage entre le réacteur d'ATR et un réacteur charge-effluent et de répartition de l'alimentation en eau du procédé. La configuration particulière de couplage permet d'assurer le maintien de la température de sortie du gaz de synthèse au dessus d'un niveau minimal correspondant à une température intermédiaire entre la température haute de l'effluent et basse de la charge. Cela permet, même en phase de démarrage ou d'arrêt de maintenir des niveaux de température proches du cas de marche nominal et donc de protéger l'échangeur lui même et le système catalytique situé en aval.
Cette configuration permet un fonctionnement efficace et sûr du procédé même en cas de mauvais dimensionnement de l'échangeur.
La configuration particulière de répartition de l'alimentation en eau du procédé permet d'ajuster le prélèvement de chaleur en différents points du système.

Pour cela la présente invention propose un procédé de production d'hydrogène intégré thermiquement par reformage d'une charge hydrocarbonée, dans un réacteur de reformage, comprenant une étape de maintien de la température de l'effluent issu du réacteur de reformage par échange de chaleur à co-courant, dans un échangeur de chaleur co-courant, entre l'effluent issu du réacteur de reformage et la charge hydrocarbonée que l'on veut réformer.

Cela évite, par conception, l'apparition de condensation d'eau en amont de réacteurs catalytiques situés en aval du réacteur de reformage.

Selon un mode de réalisation de l'invention, la température de l'effluent après passage dans l'échangeur de chaleur co-courant est comprise entre 250°C et 400°C.

Selon un mode de réalisation de l'invention, le procédé comprend une étape dans laquelle le reformat issu du l'échangeur de chaleur co-courant est purifié dans une section de purification pour générer un gaz d'hydrogène dont la pureté est supérieur à 99%.

Selon un mode de réalisation de l'invention, une partie de la purification est réalisée avec une réaction de conversion du monoxyde de carbone.

Selon un mode de réalisation de l'invention, le procédé comprend les étapes suivantes:
- un premier flux d'eau est dirigé vers l'échangeur de chaleur co-courant permettant sa vaporisation en récupérant une partie de l'enthalpie du gaz de synthèse produit,
- un second flux d'eau est dirigé vers un échangeur de chaleur en aval du réacteur de réaction de conversion du monoxyde de carbone pour recycler l'exothermie de la réaction de la réaction de conversion du monoxyde de carbone
- un troisième flux d'eau est dirigé vers un échangeur de chaleur pour récupéré la chaleur issues de fumées de combustion en abaissant au maximum la température de sortie de ces fumées.

Selon un mode de réalisation de l'invention, le premier flux d'eau est mis en contact direct avec le flux de la charge en amont de l'échangeur lorsque la charge est liquide.

Selon un mode de réalisation de l'invention, le premier flux d'eau vaporisé est mis en contact avec le flux de la charge en aval de l'échangeur co-courant et en amont du réacteur de reformage lorsque la charge est gazeuse.

Selon un mode de réalisation de l'invention, la charge hydrocarbonée est liquide.

Selon un mode de réalisation de l'invention, la charge hydrocarbonée est de l'éthanol, et peut être de l'éthanol dénaturé.

Selon un autre mode de réalisation de l'invention, la charge hydrocarbonée est gazeuse

Selon un autre mode de réalisation de l'invention, la charge hydrocarbonée est du gaz naturel.

Selon un mode de réalisation de l'invention, la réaction de reformage est un reformage autotherme.

Selon un mode de réalisation de l'invention, l'eau contenue dans le gaz riche en hydrogène issu du réacteur de reformage est éliminée grâce à un condenseur situé dans la section de purification.

Selon un mode de réalisation de l'invention, l'eau recueillie dans le condenseur est recyclée dans le procédé.

Selon un mode de réalisation de l'invention, l'eau recueillie dans le condenseur est envoyée dans le réacteur de reformage pour être utilisée comme réactif de la réaction de vaporeformage.

Selon un mode de réalisation de l'invention, les gaz résiduels rejetés par la section de purification servent de combustible au brûleur.

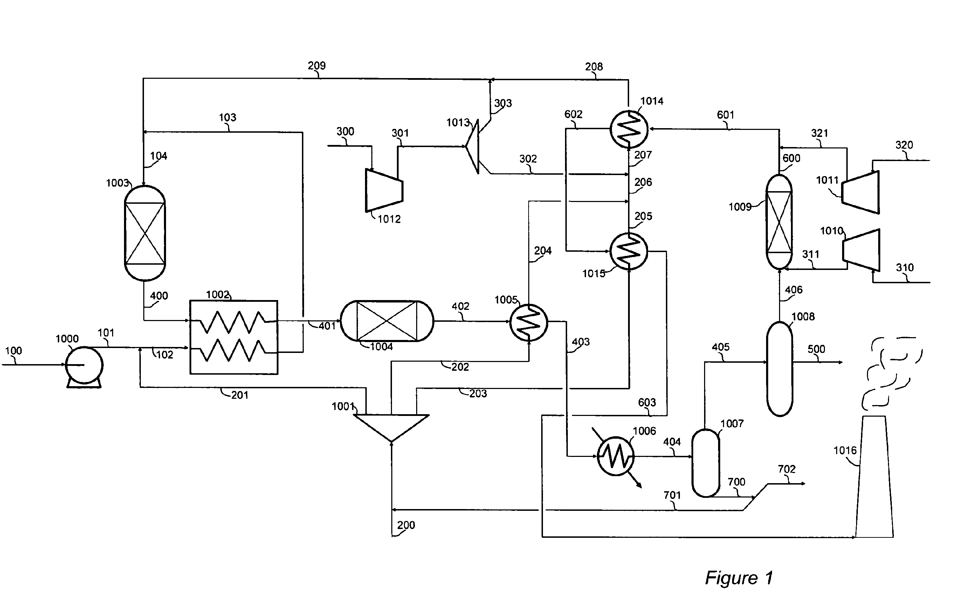

D'autres caractéristiques et avantages de l'invention seront mieux compris et apparaîtront plus clairement à la lecture de la description faite, ci-après, en se référant à la figure 1 annexée et donnée à titre d'exemple, qui est une représentation schématique du procédé selon l'invention.

L'invention est adaptée au reformage de charges hydrocarbonées. De façon préférée, la charge hydrocarbonée est liquide ou gazeuse. Il peut s'agir de gaz naturel, d'hydrocarbures, de coupes pétrolières ou d'alcools, de préférence l'éthanol qui peut être dénaturé ou enfin des mélanges de ceux-ci. Un carburant potentiellement intéressant est le bioéthanol. Ce biocarburant est présenté comme une alternative énergétique durable. Il est obtenu par fermentation, ou distillation des matières premières végétales telles que, par exemple, le saccharose ou l'amidon. Il a l'avantage de présenter un taux d'émission de gaz à effet de serre très bas.

En plus de la charge hydrocarbonée, le procédé requiert un apport d'eau. Celle-ci est de préférence déionisée.

Pour la réaction de reformage autotherme, une source d'oxygène est nécessaire à la réaction. Celle-ci peut être de l'oxygène pur, de l'air ou de l'air enrichi en oxygène.

L'invention utilise de préférence un réacteur de reformage autotherme (ATR pour Auto Thermal Reforming selon la terminologie anglo-saxonne). Celui-ci fonctionne typiquement à une température comprise entre 400°C et 1000°C, et préférentiellement inférieure à 725°C, qui est la température limite que peut supporter un matériau peu coûteux. La pression absolue est comprise en général entre 100 KPa et 4000 KPa. Le réacteur ATR contient un ou plusieurs catalyseurs convenablement choisis par l'homme du métier.

Les charges introduites dans le réacteur de reformage sont préférablement chauffées à une température comprise entre 300 °C et 500 °C, de façon préférée entre 425°C et 475°C. Lorsque la charge hydrocarbonée est liquide, celle-ci peut être évaporée seule ou avec de l'eau et/ou avec de l'air et/ou avec de la vapeur d'eau avant d'être injectée dans le réacteur de reformage sous forme gazeuse. Il est important de ne pas avoir un mélange diphasique à l'entrée du reformeur car cela réduit les performances du réacteur. L'eau est également vaporisée seule ou avec de l'air et/ou avec la charge hydrocarbonée. A l'entrée du reformeur, il est important que la température du mélange reste inférieure à la température d'auto-allumage de la charge dans les conditions opératoires. Par exemple, dans le cas d'une charge hydrocarbonée constituée d'éthanol, la température à l'entrée du réacteur de reformage est préférablement inférieure à 475°C.

L'énergie nécessaire à ces vaporisations et chauffages est prise à différents endroits du procédé, par des échangeurs de chaleur. Les sources de chaleur principales sont l'effluent chaud sortant du réacteur ATR et les gaz de combustions provenant du brûleur de gaz résiduels.

Selon un mode de réalisation de l'invention, le procédé comprend une étape d'échange de chaleur à co-courant entre l'effluent issu du réacteur ATR, qui est le gaz de synthèse et la charge hydrocarbonée que l'on veut réformer. Le couplage du réacteur ATR avec un réacteur charge-effluent en configuration co-courant permet le maintien de la température de sortie du gaz de synthèse au dessus d'un niveau minimal correspondant à une température intermédiaire entre la température haute de l'effluent et basse de la charge. Cela permet, même en phase de démarrage ou d'arrêt de maintenir des niveaux de température proches du cas de marche nominal et donc de protéger l'échangeur lui même et le système catalytique situé en aval. Cette configuration permet un fonctionnement efficace et sûr du procédé même en cas de mauvais dimensionnement de l'échangeur.
Certains autres effluents, comme celui d'un réacteur WGS peuvent être mis à profit.

Une bonne intégration thermique permet d'atteindre un rapport molaire H₂O/C assez élevé (préférentiellement supérieur à 3,0, plus préférentiellement supérieur à 4,0) ce qui permet d'atteindre de bon rendement en hydrogène (préférentiellement supérieur à 60 %, plus préférentiellement supérieur à 64 %) tout en maintenant le procédé autotherme, c'est à dire sans apport d'énergie extérieure.

Le reformat, c'est-à-dire l'effluent du réacteur de reformage, est un gaz de synthèse. Il est préférentiellement traité par une section de purification. Ladite section peut contenir une ou plusieurs unités permettant de réduire le taux de monoxyde de carbone, de séparer le gaz riche en hydrogène et de le purifier de façon à obtenir un gaz dont la pureté est supérieure à 99% et préférentiellement supérieure à 99,95%

Typiquement, un réacteur de conversion du monoxyde de carbone à l'eau est le moyen le plus utilisé. Plusieurs zones catalytiques de conversion peuvent être employées pour réduire le taux de monoxyde de carbone dans le reformat. Les catalyseurs adéquats sont choisis par l'homme du métier. En sortie d'un réacteur de conversion du monoxyde de carbone à l'eau, le pourcentage volumique de monoxyde de carbone (CO) est généralement d'environ 0,5 ou supérieur. L'effluent contient aussi de l'eau et du dioxyde de carbone (CO₂). La réaction étant exothermique, la chaleur de l'effluent du réacteur de conversion du monoxyde de carbone à l'eau est généralement mise à profit pour chauffer d'autres flux du procédé.

L'effluent du réacteur de conversion du monoxyde de carbone à l'eau est de préférence refroidi par un ou plusieurs échangeurs, puis l'eau restante peut être éliminée de préférence dans un condenseur. Pour limiter la teneur en eau dans le gaz riche en hydrogène au-delà de l'unité de purification, la température du mélange est préférablement abaissée en dessous de 40 °C. L'eau du procédé récupérée après condensation peut être recyclée.

La répartition de l'alimentation en eau du procédé, qui est importante dans la présente invention, se fait de préférence sur trois flux différents de façon à permettre d'ajuster le prélèvement de chaleur en différents points du système. Les trois flux d'eau se répartissent de la manière suivante :
- un premier flux d'eau est dirigé vers un échangeur permettant sa vaporisation en récupérant une partie de l'enthalpie du gaz de synthèse produit. Ce flux est utilisé pour contrôler la température du flux de charge évaporée ou celle de l'effluent de l'ATR pour ajuster la récupération de chaleur. Dans le cas d'une charge liquide ce flux est mélangé au flux de charge en amont de l'échangeur, c'est à dire mis en contact direct avec la charge (on contrôle ainsi la température en sortie de l'échangeur/vaporiseur en ajoutant plus ou moins d'eau à la charge). Dans le cas d'une charge gaz, le flux d'eau est injecté seul dans l'échangeur et est donc utilisé sans contact direct avec la charge qui sera mélangée à la vapeur formée en aval de l'échangeur et en amont de l'ATR. Dans le cas d'une charge liquide le rapport O₂/C est également ajusté, l'oxygène étant issu de l'eau et/ou la charge dans l'échangeur charge effluent. De même, dans ce cas, la fraction du débit d'eau est calculée pour limiter les réaction de pyrolyse de la charge dans l'échangeur et ajuster la température du gaz de synthèse en aval,
- le second flux d'eau est dirigé vers un échangeur de chaleur en aval du réacteur WGS pour recycler l'exothermie de la réaction de WGS dans le procédé et ainsi améliorer le rendement de l'unité,
- le troisième flux d'eau est dirigé vers un échangeur de chaleur pour récupéré la chaleur issues de fumées de combustion en abaissant au maximum la température de sortie de ces fumées.

Il est possible d'utiliser une autre forme de purification supplémentaire, comme par exemple une oxydation préférentielle (PrOx). Dans une réalisation préférée de ce procédé, la section de purification comprend un système de purification par adsorption (PSA pour Pressure Swing Adsorption selon la terminologie anglo-saxonne). Cette technologie permet d'obtenir de l'hydrogène de très haute pureté (supérieure à 99,9 % volumique) à partir d'un gaz riche en hydrogène. Les gaz impropres rejetés par cette section de purification, nommés "off-gas" selon la terminologie anglo-saxonne, sont constitués, par exemple lors d'un reformage autotherme, d'une partie de l'hydrogène produit (environ 15 % molaire), de charge hydrocarbonée non consommée dans la réaction (environ 2 % molaire), d'azote (environ 47 % molaire), de dioxyde de carbone (environ 33 % molaire), de monoxyde de carbone (environ 2 % molaire) et d'eau (environ 1 % molaire). Ces gaz sont préférentiellement brûlés dans un brûleur à gaz.

Ce brûleur catalytique à gaz est alimenté en air (appelé air primaire de combustion, ou air primaire) par un système de ventilation. Si l'installation de production d'hydrogène est couplée à une pile à combustible, les gaz anodiques et cathodiques sortant sont aussi utilisés préférablement comme gaz résiduels et brûlés dans le brûleur de gaz résiduels.
Les effluents chauds du brûleur, servent par la suite à chauffer et/ou à vaporiser indirectement la charge hydrocarbonée et/ou l'eau et/ou l'air par l'intermédiaire d'échangeurs de chaleur.
Ainsi, deux échangeurs de chaleurs sont installés consécutivement sur le flux chaud des effluents du brûleur :
- Le premier échangeur, le plus près du brûleur, et donc en contact avec les effluents très chauds du brûleur, sert à surchauffer un mélange de vapeur d'eau, avec de préférence de l'air ou la charge hydrocarbonée sous forme gazeuse. Ce mélange ainsi surchauffé par échange thermique indirect est injecté directement dans le réacteur de reformage, où il sert de combustible.
- Le second échangeur, situé en aval du premier échangeur en considérant le flux chaud des effluents du brûleur, et donc en contact avec ces mêmes effluents refroidis par le premier échangeur, sert de vaporisateur. Il permet d'évaporer un flux d'eau liquide ou une charge hydrocarbonée lorsque celle-ci est liquide. Il génère un flux de vapeur d'eau et/ou de charge hydrocarbonée vaporisée.
Selon une version du procédé, un flux d'eau liquide et/ou une charge hydrocarbonée liquide est vaporisé par le second échangeur de chaleur, est mélangé à une source d'oxygène, préférablement un flux d'air, et ce mélange est surchauffé dans le premier échangeur de chaleur. Cependant, la circulation des flux peut être réalisée par toutes manières différentes que l'homme du métier juge possible. Par exemple, le flux vaporisé issu du second échangeur de chaleur peut être mélangé à d'autres flux avant que ce nouveau mélange pénètre dans le premier échangeur. Il est généralement préféré d'avoir en entrée et en sortie de tous les échangeurs de chaleur des flux monophasés.

En général, la température de tous les flux ne dépasse pas 725 °C, qui est la température maximale que peut supporter un matériau peu onéreux. De plus, la distribution de la chaleur entre les deux échangeurs est essentielle principalement pour deux raisons :
- Pour éviter que le mélange sortant du premier échangeur de chaleur et parvenant en entrée du réacteur de reformage ait une température au-delà de sa température d'auto-allumage.
- Pour que le flux d'eau sortant du second échangeur de chaleur soit totalement vaporisé. En effet, si la vaporisation n'est pas complète en sortie du second échangeur, c'est un mélange diphasique qui est ensuite injecté dans le premier échangeur, ce qui diminue l'efficacité de l'échange thermique à l'intérieur de ce premier échangeur car la distribution des deux phases dans l'échangeur n'est généralement pas homogène.

Un moyen pour contrôler la distribution de la chaleur dans les deux échangeurs consiste à diluer le gaz effluent chaud du brûleur par un flux froid qui peut être par exemple de l'air frais ou de l'eau. Les termes de flux froid ou frais désignent dans la suite du texte un flux dont la température est inférieure d'au moins 200°C à la température de combustion à l'intérieur d'un brûleur. De façon préférée, ce flux frais a une température comprise entre - 10°C et 400°C, et de préférence comprise entre 0°C et 400°C. De façon très préférée, ce flux frais est à température ambiante. De façon encore plus préférée, ce flux frais est un flux d'air. Il est mélangé au gaz chaud de sortie du brûleur entre la sortie de la zone catalytique du brûleur et le premier échangeur. Le mélange peut donc être effectué à l'extérieur du brûleur ou à l'intérieur du brûleur après la zone catalytique. Le débit de ce flux ajouté est contrôlé. Grâce à cet ajout d'un flux frais à l'effluent chaud du brûleur, il est possible de diminuer la température de cet effluent chaud avant son entrée dans le premier échangeur, et ainsi de réduire l'écart de température entre la source chaude et la source froide de l'échangeur. De cette façon, la puissance calorifique cédée par le mélange chaud issu du brûleur dans le premier échangeur est diminuée. Toutefois, le débit du mélange chaud provenant du brûleur étant plus élevé, la température du flux vaporisé surchauffé sortant du premier échangeur reste inchangée. La température du mélange chaud après passage dans le premier échangeur reste suffisamment élevée pour permettre la vaporisation totale de l'eau, et/ou de la charge hydrocarbonée lorsqu'elle est liquide, qui est introduite dans le second échangeur.

Le mélange de gaz résiduels de la section de purification de l'hydrogène et d'air primaire de combustion est brûlé dans le brûleur catalytique à environ 900°C. Le flux frais, préférentiellement d'air, injecté dans le gaz effluent du brûleur, permet de réduire la température dudit gaz effluent à une température inférieure à 725°C, de préférence entre 600°C et 725°C, de manière plus préférée entre 600°C et 700°C. Un système de contrôle de la température des gaz effluents du brûleur avant l'adjonction du flux frais et après ladite adjonction permet de régler la température de l'effluent chaud du brûleur. Le premier système de contrôle de la température avant l'adjonction du flux frais est relié au système de distribution de l'air primaire de combustion. Il permet d'obtenir une combustion efficace et une température de combustion généralement d'environ 900°C. Le second système de contrôle de la température après l'adjonction du flux frais est relié au système de distribution du flux frais, préférentiellement de l'air. Il permet de régler la température du gaz effluent du brûleur chaud avant le premier échangeur de chaleur.

Dans une variante du procédé, un flux d'eau est vaporisé dans le second échangeur de chaleur, puis surchauffé dans le premier échangeur. Toujours selon cette variante, l'approvisionnement en air du réacteur de reformage, lorsque le reformage est autotherme, s'effectue par addition du flux d'air audit flux d'eau en deux points : l'un entre le second échangeur et le premier échangeur, l'autre entre le premier échangeur et le réacteur de reformage. L'approvisionnement en air est contrôlé de façon préférée par un système compresseur/vanne relié à un capteur de température situé sur le flux issu du réacteur de reformage. En effet, l'ajout d'une source d'oxygène dans le réacteur de reformage favorise les réactions d'oxydation partielle et totale de la charge hydrocarbonée, qui sont exothermiques. La répartition de cet air froid entre le premier et le second point d'entrée sur le flux d'eau est quant à elle contrôlée de façon préférée par une vanne reliée à un capteur de température situé à l'entrée du réacteur de reformage. De cette manière, la température en entrée du reformeur autotherme ne dépasse pas préférentiellement la température d'autoallumage du combustible.

Le procédé selon la présente invention présente ainsi les avantages suivants:
- contrôle de la température du gaz de synthèse en sortie de l'échangeur charge - effluent par fonctionnement en co-courant, température comprise entre 250 et 400 °C, et préférentiellement entre 300 et 350 °C,
- maintien de la température du gaz de synthèse en sortie de l'échangeur charge - effluent par fonctionnement en co-courant même pendant les phases transitoires, entre 250°C et 400°C, de préférence entre 300°C et 350°C,
- contrôle indépendant du ratio O₂/C dans le mélange eau-charge pour limiter le cokage durant la vaporisation de la charge par arrivée d'eau dédiée.
- récupération de la chaleur produite par la réaction de WGS adaptable en fonction de la teneur en CO et indépendamment de l'alimentation globale en eau par une arrivée d'eau dédiée. En effet, selon les performances du reformeur, la teneur en CO est variable. La réaction de WGS est exothermique le fait d'avoir un flux d'eau modulable dans l'échangeur en sortie de WGS permet de récupérer la chaleur produite par la réaction de WGS en fonction de la teneur en CO.

Ce procédé permet également d'éviter les problèmes suivants, rencontrés dans des procédés de l'art n'utilisant d'étape d'échange de chaleur à co-courant:
- un refroidissement de l'effluent gazeux (gaz de synthèse) en dessous de son point de condensation (point de rosée du mélange) et qui provoque l'apparition de condensats liquides, en particulier la présence d'eau liquide peut provoquer une alteration physique ou chimique des phases actives du catalyseur de WGS. De plus ces condensats sont potentiellement corrosif en fonction de la nature de la charge et en particulier de son taux de sulfuration,
- un refroidissement de l'effluent gazeux d'ATR tel que sa température n'est plus suffisante pour activer les réactions catalytiques nécessaires pour poursuivre le traitement du gaz de synthèse et commencer à le purifier, comme la réaction de conversion du monoxyde de carbone (WGS, pour Water Gas Shift selon la terminologie anglo-saxonne) par exemple,
- lors du démarrage ou de l'arrêt de l'installation, risque de refroidissement et de condensation dans les éléments catalytiques pouvant endommager ces derniers, par exemple, soit par action chimique du condensat, soit par endommagement lié à la remontée rapide en température sans avoir pu sécher convenablement le support de catalyseur.

### Exemple de mise en oeuvre du procédé selon l'invention

Dans le procédé selon l'invention, l'unité de vaporéformage, illustrée sur la figure 1, est alimentée en charge hydrocarbonée et par exemple en éthanol via un conduit de circulation d'éthanol (100) par une pompe (1000) pour produire une charge liquide et sous pression circulant via un conduit de charge liquide (101). L'unité de vaporéformage est alimentée en eau sous pression va un conduit de circulation d'eau (200) à une température proche de la température ambiante. L'unité de vaporéformage est également alimentée en air via le conduit d'air (300), qui est mis à la pression du procédé par un compresseur (1012) et circule à la pression voulue via un conduit d'air sous pression (301). L'unité est alimentée en air via un deuxième conduit d'air (311) qui alimente le brûleur (1009) pour assurer la combustion de ce dernier. L'air primaire utilisé pour le bruleur circule via le conduit d'air primaire (310) et est mis en pression par une soufflante (1010). De l'air secondaire circulant via un conduit d'air secondaire (320) est mis sous pression par une deuxième soufflante (1011). Ce flux d'air secondaire sous pression et circulant via le conduit d'air secondaire sous pression (321) permet de contrôler la température des fumées issues du brûleur et circulant via le conduit de fumées (600).
L'unité produit un flux d'hydrogène (H₂) sous pression circulant via le conduit d'hydrogène (500), un flux de fumées circulant via le conduit de fumée refroidies (603) et une purge aqueuse circulant via le conduit de purge aqueuse (702).
L'apport de chaleur destiné à conditionner les flux d'alimentation en eau et en air du procédé est apporté par combustion de la purge aqueuse circulant via le conduit de purge (406) issu du dispositif de purification d'hydrogène par adsorption-désorption alternées sur lit de solide par variation de pression (PSA, pressure swing adsorption) (1008). Le flux de fumée produit circulant via le conduit de fumées (600), dont la température est ajustée par adjonction du flux d'air secondaire sous pression circulant via le conduit d'air secondaire sous pression (321), permet d'une part d'assurer la surchauffe du mélange air-vapeur circulant dans le conduit air-vapeur (209) mais aussi la vaporisation du flux d'eau N°3 alimentant le procédé et circulant via la conduite d'eau N°3 (203) par l'intermédiaire, respectivement, des échangeurs de chaleur N°1 (1014) et N°2 (1015). Il en résulte un flux de fumées refroidies circulant via la conduite de fumée refroidies (603) évacuées par un évent ou une cheminée (1016).

L'enchaînement détaillé conduisant à la production d'hydrogène est le suivant. Il est ajouté au flux de charge sous pression circulant via le conduit de charge liquide (101) un flux N°1 d'eau circulant via un conduit d'eau N°1 (201) issu de la conduite de circulation d'eau (200) par l'intermédiaire d'un séparateur de flux d'eau (1001). Cette adjonction d'eau à la charge a pour but de pouvoir contrôler, entre autres, le rapport oxygène sur carbone (O₂/C) du flux résultant du mélange de la charge liquide et du flux d'eau et circulant via la conduite de mélange charge-eau (102). De ce rapport (O₂/C) dépend le cokage ou non de la charge dans l'échangeur de chaleur (1002). En fonction de la charge, des pressions et des températures du procédé, un rapport O₂/C minimal peut être défini. Le flux résultant du mélange de la charge liquide et du flux d'eau et circulant via la conduite de mélange charge-eau (102) dont la température est inférieure à son point d'ébullition, et par exemple comprise entre 140 et 200 °C à une pression de 0,9 MPa (variable selon la teneur en eau choisie), doit être vaporisé avant d'alimenter, via le conduit charge-eau vaporisée (103), le réacteur d'ATR (1003) qui produit le gaz de synthèse circulant via le conduit de gaz de synthèse (400). Par ailleurs ce gaz de synthèse sous pression circulant via le conduit de gaz de synthèse (400) produit par le réacteur d'ATR (1003) doit être rapidement refroidi pour éviter le phénomène de corrosion de type "carburation catastrophique" ("metal dusting" selon la terminologie anglo-saxonne). Pour cela les flux circulant via le conduit de mélange charge-eau (102) et le conduit de gaz de synthèse (400) sont introduits dans l'échangeur de chaleur (1002) en configuration à co-courant.

Dans le cas d'une charge hydrocarbonée gazeuse, par exemple du gaz naturel, la même configuration d'ensemble est utilisée. Seul le point de mélange de la charge dans le circuit diffère. En effet, dans le cas d'une charge gazeuse, le flux d'eau (201) est injecté seul dans l'échangeur de chaleur co-courant (1002) et est donc utilisé sans contact direct avec la charge gazeuse (non illustrée) qui sera mélangée à la vapeur formée en aval de l'échangeur de chaleur co-courant (1002) dans le conduit charge-eau vaporisée (103) et en amont de l'ATR (1003).

Il en résulte un flux de charge vaporisée et surchauffée circulant via le conduit charge-eau vaporisée (103) et un flux de gaz de synthèse refroidi circulant via le conduit de gaz de synthèse refroidi (401). Le refroidissement est tel que le gaz de synthèse refroidi circulant via le conduit de gaz de synthèse refroidi (401) reste à une température supérieure à son point de rosée, en général comprise entre 128°C et 168°C, et de préférence égale à 148 °C à une pression de 0,88 MPa. L'échangeur de chaleur (1002) étant destiné à la vaporisation totale de la charge, les conditions de température sur les flux circulant via le conduit de charge-eau vaporisée (103) et le conduit de gaz de synthèse refroidi (401) sont contrôlées par le contrôle du débit du flux d'eau circulant via une conduite N°1 d'eau (201) sous condition que le rapport O₂/C minimal soit assuré. Le contrôle du débit d'eau injecté à l'échangeur de chaleur (1002) est possible grâce à l'utilisation de trois circuits parallèles pour la vaporisation du flux complet de l'eau circulant dans le conduit d'eau (200). Pour le bon fonctionnement des réactions de reformage dans le réacteur ATR (1003), ce dernier, en plus d'être alimenté par la charge vaporisée circulant via le conduit de charge-eau vaporisée (103) doit être alimenté par un mélange d'air et de vapeur circulant dans le conduit d'air-vapeur (209). Il en résulte un mélange de charge vaporisée, d'air et de vapeur circulant dans le conduit de mélange air-vapeur (104) qui doit être constitué au plus proche des éléments catalytique du réacteur ATR (1003) de façon à éviter les phénomène d'auto-inflammation. Ces éléments catalytiques sont, par exemple, des catalyseurs adapté au reformage de la charge choisie en ATR supporté sur des monolithes céramiques inertes. Il en résulte un gaz de synthèse chaud et sous pression circulant dans le conduit de gaz de synthèse (400).

Le bon fonctionnement du procédé ATR est conditionné, en fonction de la nature de la charge, à un rapport vapeur sur carbone donné (S/C, steam over carbon ratio), en général compris entre 2 et 5. Le rapport S/C est contrôlé par le débit total de l'alimentation en eau du procédé circulant dans le conduit de circulation d'eau (200). Ce débit étant supérieur à celui de l'eau adjointe à la charge et circulant dans le conduit d'eau N°1 (201), il convient de la fournir séparément. Une seconde fraction circulant dans le conduit d'eau N°2 (202) de l'alimentation en eau est ainsi constituée. Cette seconde fraction d'eau est fournie sous forme de vapeur en récupérant la chaleur produite par la réaction WGS réalisée dans le réacteur WGS (1004) par le biais d'un échangeur de chaleur WGS (1005). Une troisième fraction circulant dans le conduit d'eau N°3 (203) de l'alimentation est également constitué. Cette troisième fraction d'eau est fournie sous forme de vapeur circulant dans le deuxième conduit de vapeur (205) en récupérant la chaleur produite par les fumées circulant dans le deuxième conduit de fumées (602) par le biais de l'échangeur de chaleur des fumées N°2 (1015) pour assurer un bon rendement énergétique du procédé. Il en résulte un flux de vapeur circulant dans le conduit de vapeur (204) provenant de l'échangeur de chaleur WGS (1005) et un second circulant dans le deuxième conduit de vapeur (205) provenant de l'échangeur de chaleur des fumées N°2 (1015). Le contrôle de la répartition des débits de ces deux flux de vapeur permet d'optimiser la récupération de la chaleur issue du réacteur de WGS (1004) sans entraîner une condensation du gaz de synthèse. Un autre paramètre important du fonctionnement du procédé de reformage selon l'invention est l'apport en oxygène dans le milieu réactionnel. Celui-ci va contrôler l'apport de chaleur par oxydation d'une partie de la charge et/ou du gaz de synthèse. Cet apport dépend de la façon dont l'énergie issue du procédé a pu être récupérée : récupération de la chaleur sur le réacteur de WGS (1004) ou récupération de la chaleur issue de la combustion de la purge du PSA (1008). L'apport d'oxygène se fait principalement par de l'air circulant dans le conduit d'air (300) mis à la pression du procédé par un compresseur (1012) et circule à la pression voulue via la conduite d'air sous pression (301). Ce flux d'air est pour partie envoyé via le deuxième conduit d'air (302) provenant d'un répartiteur d'air (1013) pour constituer un premier mélange, circulant dans le conduit de mélange vapeur-air (207) avec la vapeur circulant dans le troisième conduit de vapeur (206) qui est la continuation du conduit de vapeur (205) provenant de l'échangeur de chaleur des fumées N°2 (1015), qui va être surchauffé via l'échangeur de chaleur des fumées N°1 (1014) par la chaleur extraite des fumées circulant dans le conduit de fumées (601) issues du brûleur (1009). Il en résulte un flux de fumées partiellement refroidies circulant dans le deuxième conduit de fumées (602) provenant de l'échangeur de chaleur N°1 (1014). Le reste de l'air circulant dans le troisième conduit d'air (303) provenant du répartiteur (1013) est ajoutée au mélange air - vapeur circulant dans le conduit air-vapeur (208) provenant de l'échangeur de chaleur des fumées N°1 (1014), le mélange ainsi formé circule dans le conduit air-vapeur (209). La répartition par le répartiteur (1013) de l'air entre les flux circulant dans les conduits (302) et (303) est effectuée de telle façon que le mélange de l'air circulant dans le conduit (302) avec la vapeur circulant dans le conduit (206) n'entraîne pas la condensation de cette dernière.

Le flux de gaz de synthèse chaud circulant dans le conduit (400) et produit par le reformage de la charge dans le réacteur d'ATR (1003) est refroidi dans l'échangeur co-courant (1002) et circule dans le conduit de gaz de synthèse refroidi (401). Sa température de sortie est en générale comprise entre 300 à 350°C ce qui est suffisant pour activer la réaction de WGS à laquelle il va être soumis dans le réacteur de WGS (1004). En effet le gaz de synthèse issu du reformage ATR de l'éthanol peut comporter de fortes teneurs en monoxyde de carbone (CO), en général inférieur ou égale à 10 %mol. Or il est possible de maximiser la quantité d'hydrogène produite par conversion d'une mole de CO et d'une mole d'eau (H₂O) en une mole de dioxyde de carbone (CO₂) et une mole d'H₂ par réaction WGS. Cette réaction est exothermique, la température du gaz de synthèse appauvri en CO circulant dans le conduit de gaz de synthèse appauvri (402) (il subsiste de l'ordre d'un pourcent de CO) est supérieure, généralement comprise entre 0 et 40°C, et de préférence entre 20 et 30°C, à la température du gaz de synthèse circulant dans le conduit en entrée du réacteur de WGS (401). Ce gaz de synthèse doit être refroidi par le biais d'un échangeur de chaleur(1006) et déshydraté par un ballon séparateur (1007) avant son entrée dans le PSA (1008), la chaleur est recyclée par vaporisation d'une partie de l'alimentation en eau circulant dans le conduit d'eau N°2 (202) dans l'échangeur de chaleur WGS (1005). Le gaz de synthèse refroidi circulant dans le conduit de gaz de synthèse refroidi (403) est amené en dessous de son point de condensation (404), c'est à dire en général à une température comprise entre 15 et 40°C, dans l'échangeur de chaleur (1006) qui peut être couplé à un groupe froid (non représenté), avant d'être séparé de l'eau résiduelle circulant dans le conduit d'eau résiduelle (700) par un ballon séparateur (1007). Le ballon (700) peut être complété par un coalesceur (non représenté) pour améliorer l'efficacité de l'élimination de l'eau dans le gaz de synthèse. L'eau ainsi récupérée est soit recyclée dans le conduit de recyclage (701) après retraitement (non représenté), soit purgée de l'unité dans le conduit de purge (702).

L'hydrogène circulant dans le conduit d'hydrogène (500) est produit après passage du gaz de synthèse dans le PSA (1008) dans lequel la quasi totalité des espèces autres que l'H₂, typiquement et de façon non exhaustive celles présentes dans l'air ou coproduites par le reformage de l'éthanol à savoir N₂, CO, CO₂, CH₄, C₂H₄, C₂H₆, C₃H₈, C₃H₆, Ar ou H₂O, s'adsorbe de façon réversible sur le lit de solide adsorbant du PSA (1008) (qui est en général mais pas exclusivement du charbon actif et/ou un tamis moléculaire minéral). L'hydrogène n'est pas retenu et est produit avec une très grande pureté, les impuretés étant réduites à l'état de traces, en général inférieure à 500 ppm. Les espèces adsorbées sont récupérées via le conduit de purge (406) par abaissement de la pression de l'enceinte du PSA (1008) de la pression du procédé à une pression proche de la pression atmosphérique entraînant la baisse de la pression partielle de chaque corps dans la phase gaz et donc la désorption des espèces adsorbées. Ce flux gazeux à basse pression le circulant dans le conduit de purge (406) est la purge du PSA (1008).

Cette purge circulant dans le conduit de purge (406) contient encore une part sensible de gaz combustibles tels que CO, H₂. La purge est ensuite brûlée avec de l'air, circulant dans le conduit d'air (311), dans le brûleur (1009) de façon à fournir des fumées chaudes circulant dans le conduit de fumées (600) destinées à recycler la chaleur dans le procédé. La température de ces fumées est contrôlée par l'apport d'air secondaire circulant dans le conduit d'air secondaire sous pression(321) pour que les fumées dans le conduit de fumées (601) issues du brûleur (1009) envoyées vers le procédé soient compatibles avec la métallurgie du système.

Les exemples suivant illustrent le procédé selon l'art antérieur et selon l'invention.

### Exemples

### Exemple 1 comparatif: configuration à contre courant

Cet exemple illustre un cas de marche normale du procédé selon l'art antérieur.
Le procédé selon l'art antérieur utilise une configuration de l'échangeur de chaleur, couplé au réacteur ATR, en contre-courant. Il est décrit en s'appuyant sur la figure 1 à l'exception de l'échangeur (1002) charge-effluent qui est en configuration co-courant dans le procédé selon l'invention contrairement à celui de exemple 1 qui est à contre-courant. Cette modification n'impacte pas la désignation des flux de la figure 1.
On considère la conversion d'un flux de 29,2 kg/h d'éthanol circulant dans le conduit (100). Il est mélangé à un flux d'eau liquide (201) de 37 kg/h. Cette charge liquide entre dans l'échangeur (1002) à une température proche de la température ambiante qui est de 35°C.
Le flux (400) en sortie du réacteur d'ATR (1003) est le fruit de la conversion catalytique à haute température, ici 690 °C, et en pression 0,88 MPa, de la charge circulant dans le conduit (201) vaporisée à laquelle on a adjoint un complément de vapeur (206) de 56,6 kg/h et un complément d'air circulant dans le conduit (301) de 54,8 kg/h. On obtient un gaz de synthèse circulant dans le conduit (400) à 690 °C de composition suivante :

| Composé | % molaire |
|---|---|
| Hydrogène (H₂) | 25,1 |
| Méthane (CH₄) | 1,1 |
| Azote (N₂) | 15,3 |
| Monoxyle de carbone (CO) | 3,3 |
| Dioxyde de carbone (CO₂) | 9,3 |
| Eau (H₂O) | 45,9 |

La température de rosée de cet effluent gazeux à 0,88 MPa est 148 °C.
Le tableau suivant donne les températures d'entrée et sortie des différents flux autour de l'échangeur (1002) en configuration contre courant.

| Flux | Température (°C) |
|---|---|
| Sortie ATR (400) | 690 |
| Entrée WGS (401) | 166 |
| Charge liquide (102) | 35 |
| Charge vaporisée (103) | 507 |

On constate que la température du gaz de synthèse refroidi circulant dans le conduit (401) est de 166 °C, ce qui est proche de son point de rosée (148 °C), et que la température de la charge vaporisée circulant dans le conduit (103) est de 507 °C, ce qui est trop élevé pour prévenir efficacement les risques d'autoallumage en entrée du réacteur de reformage lors du mélange de la charge vaporisée (103) avec l'air circulant dans le conduit (209) pour entrer par le conduit (104) dans le réacteur (1003).
Par ailleurs la température du gaz de synthèse refroidi circulant dans le conduit (401) doit être suffisante pour initier la réaction de conversion du monoxyde de carbone (WGS) avec une cinétique satisfaisante or avec 166 °C, on est sensiblement en dessous des 200 °C requis et largement en dessous des 250 °C souhaitables. La conséquence du non fonctionnement du réacteur de WGS (1003) est que le CO résiduel n'est pas converti en H₂ ce qui peut entraîner une perte de rendement en hydrogène sensible pouvant atteindre 10 %.
Pour ce qui est de la température élevée d'entrée dans le réacteur (1003) il est préférable de rester en dessous d'une température de l'ordre de 450 °C pour éviter l'autoallumage. La conséquence d'un autoallumage est un risque pour la sécurité de l'opérateur et de l'unité et impose un arrêt d'urgence.
Enfin, dans cette configuration à contre-courant, on est confronté à des températures de paroi très élevées puisque le gaz de synthèse chaud circulant dans le conduit (400) échange de la chaleur avec la charge vaporisée circulant dans le conduit (103) pour des températures respectives de 690 °C et 507 °C. La température de paroi dans cette configuration est au-delà de 600 °C. Cette température impose des contraintes thermomécaniques fortes sur le matériau et le place en outre dans des conditions de *metal dusting* susceptibles d'abimer l'échangeur.

### Exemple 2 selon l'invention : configuration à co-courant

Cet exemple illustre un cas de marche normale du procédé l'invention.
L'échangeur considéré est identique à l'échangeur de l'exemple 1, mais il est monté en configuration à co-courant au lieu de contre-courant.

On considère de la même façon que dans l'exemple 1 la conversion d'un flux de 29,2 kg/h d'éthanol conduit de circulation d'éthanol circulant dans le conduit (100). Il est mélangé à un flux d'eau liquide circulant dans le conduit (201) de 37 kg/h. Cette charge liquide entre dans l'échangeur (1002) à une température proche de la température ambiante, ici 35 °C.

Le flux circulant dans le conduit (400) en sortie du réacteur d'ATR (1003) est le fruit de la conversion catalytique à haute température, ici 690 °C, et en pression 0,88 MPa, de la charge circulant dans le conduit (201) vaporisée à laquelle on a adjoint un complément de vapeur circulant dans le conduit (206) de 56,6 kg/h et un complément d'air circulant dans le conduit (301) de 54,8 kg/h. On obtient ici encore un gaz de synthèse circulant dans le conduit (400) à 690 °C de composition suivante :

| Composé | % molaire |
|---|---|
| Hydrogène (H₂) | 25,1 |
| Méthane (CH₄) | 1,1 |
| Azote (N₂) | 15,3 |
| Monoxyde de carbone (CO) | 3,3 |
| Dioxyde de carbone (CO₂) | 9,3 |
| Eau (H₂O) | 45,9 |

La température de rosée de cet effluent gazeux à 0,88 MPa est 148 °C.
Le tableau suivant donne les températures d'entrée et sortie des différents flux autour de l'échangeur (1002) en configuration co-courant.

| Flux | Température (°C) |
|---|---|
| Sortie ATR (400) | 690 |
| Entrée WGS (401) | 274 |
| Charge liquide (102) | 35 |
| Charge vaporisée (103) | 269 |

La conséquence du fonctionnement à co-courant est la convergence des températures des sorties circulant dans le conduit (401) et dans le conduit (103) de l'échangeur (1002).

La température du gaz de synthèse refroidi est de 274 °C, ce qui convient tout particulièrement à la réaction de conversion du monoxyde de carbone devant avoir lieu dans le réacteur (1004) pour lequel il convient d'avoir une température en entrée entre 250 et 300 °C.
La température de la charge vaporisée circulant dans le conduit (103) est de 269 °C, ce qui permet d'avoir une température du mélange circulant dans le conduit (104) avec l'air et la vapeur surchauffée circulant dans le conduit (103) de l'ordre de 400 °C. Cette température convient tout à fait à une opération sécurisée du réacteur d'ATR (1003).
Par ailleurs, pour ce qui est de la température de paroi de l'échangeur (1002), la zone la plus contrainte est toujours celle où le gaz de synthèse chaud circulant dans le conduit (400) est introduit à la différence avec l'exemple 1 que la paroi est au contact de la charge liquide circulant dans le conduit (102) ce qui permet de maintenir une température de paroi inférieure à 400 °C et donc de limiter les contraintes thermomécaniques mais aussi de se maintenir en dehors de la zone de metal dusting.

## Revendications

1. Procédé de production d'hydrogène intégré thermiquement par reformage d'une charge hydrocarbonée, dans un réacteur de reformage, comprenant une étape de maintien de la température de l'effluent issu du réacteur de reformage par échange de chaleur à co-courant, dans un échangeur de chaleur co-courant, entre l'effluent issu du réacteur de reformage et la charge hydrocarbonée que l'on veut réformer comprenant une étape dans laquelle le reformat issu du l'échangeur de chaleur co-courant est purifié dans une section de purification pour générer un gaz d'hydrogène dont la pureté est supérieure à 99% et dans lequel :
- un premier flux d'eau est dirigé vers l'échangeur de chaleur co-courant permettant sa vaporisation en récupérant une partie de l'enthalpie du gaz de synthèse produit pour contrôler la température du flux de charge,
- un second flux d'eau est dirigé vers un échangeur de chaleur en aval du réacteur de réaction de conversion du monoxyde de carbone pour recycler l'exothermie de la réaction de la réaction de conversion du monoxyde de carbone
- un troisième flux d'eau est dirigé vers un échangeur de chaleur pour récupéré la chaleur issues de fumées de combustion en abaissant au maximum la température de sortie de ces fumées.

2. Procédé selon la revendication 1 dans lequel la température de l'effluent après passage dans l'échangeur de chaleur co-courant est comprise entre 250°C et 400°C.

3. Procédé selon la revendication 2 dans lequel une partie de la purification est réalisée avec une réaction de conversion du monoxyde de carbone.

4. Procédé selon la revendication 3 dans lequel, le premier flux d'eau est mis en contact direct avec le flux de la charge en amont de l'échangeur lorsque la charge est liquide.

5. Procédé selon la revendication 4 dans lequel, le premier flux d'eau vaporisé est mis en contact avec le flux de la charge en aval de l'échangeur co-courant et en amont du réacteur de reformage lorsque la charge est gazeuse.

6. Procédé selon une des revendications 1 à 4 dans lequel la charge hydrocarbonée est liquide.

7. Procédé selon une des revendications 1 à 4 ou 6 dans lequel la charge hydrocarbonée est de l'éthanol.

8. Procédé selon une des revendications 1 ou 5 dans lequel la charge hydrocarbonée est gazeuse.

9. Procédé selon une des revendications 1 ou 8 dans lequel la charge hydrocarbonée est du gaz naturel.

10. Procédé selon l'une des revendications précédentes dans lequel la réaction de reformage est un reformage autotherme.

11. Procédé selon la revendication 10 dans lequel l'eau contenue dans le gaz riche en hydrogène issu du réacteur de reformage est éliminée grâce à un condenseur situé dans la section de purification.

12. Procédé selon la revendication 11 dans lequel l'eau recueillie dans le condenseur est recyclée dans le procédé.

13. Procédé selon une des revendications 11 à 12 dans lequel l'eau recueillie dans le condenseur est envoyée dans le réacteur de reformage pour être utilisée comme réactif de la réaction de vaporeformage.

14. Procédé selon une des revendications 11 à 13 dans lequel des gaz résiduels rejetés par la section de purification servent de combustible au brûleur.
